# EUROPEAN PATENT SPECIFICATION

(11) **EP 2 353 110 B1**
(45) Date of publication and mention of the grant of the patent: **10.07.2019**
(21) Application number: 09752158.7
(22) Date of filing: 06.11.2009
(51) Int. Cl.: G06F 16/23

(54) **METHOD OF INTEGRATING IN REAL TIME LARGE VOLUMES OF UPDATES IN A DATABASE**
VERFAHREN ZUM INTEGRIEREN VON GROSSEN VOLUMINA VON AKTUALISIERUNGEN IN ECHTZEIT IN EINE DATENBANK
PROCÉDÉ D'INTÉGRATION DE GRANDS VOLUMES DANS UNE BASE DE DONNÉES EN TEMPS RÉEL

(30) Priority: 06.11.2008 EP 08305779; 12.11.2008 US 269326
(43) Date of publication of application: 10.08.2011
(73) Proprietor: Amadeus S.A.S., 06410 Biot (FR)
(72) Inventor: VANHOVE, Nathalie, F-06530 Le Tignet (FR); DANIELLO, Rudy, F-06200 Nice (FR); RUSCICA, Brigitte, F-06130 Grasse (FR); MIRAILLES, Guy, F-83440 Seillans (FR); LEMAIRE, Pierre, F-06700 Saint Laurent du Var (FR)
(74) Representative: Samson & Partner Patentanwälte mbB
(86) International application number: PCT/EP2009/064777
(87) International publication number: WO 2010/052311

(56) References cited:
- WO-A-01/90933
- WO-A-02/17083
- WO-A-98/50868
- US-A- 5 796 999
- US-B1- 7 164 676

## Description

### FIELD OF THE INVENTION

The present invention relates generally to the management of databases and more specifically to a method of accommodating in real-time large numbers of updates brought to a database while it is operational and used to serve numerous end-users.

### BACKGROUND OF THE INVENTION

Since they were introduced and started to be largely adopted in the 70's databases have proliferated in all sorts of domains including engineering, scientific, commercial and business applications. Their size can be anything ranging from a small database used by a single individual on a personal computer, e.g., to keep track of personal finances, to large and very large databases set up by various institutions, companies and commercial organizations to support their activity. In an all-interconnected world those large databases are also generally, if not always, made accessible to numerous remotely located end-users to query whatever information is made available by the databases.

In the airline industry, examples of such very-large databases are the ones that hold the airline fares along with the rules restricting their use. Fare databases are mainly set up by a few worldwide global distribution systems (GDSs) that provide travel services to all the actors of the travel industry including the traditional travel agencies and all sorts of other online travel service providers. Such a GDS is for example AMADEUS, a European travel service provider with headquarters in Madrid, Spain.

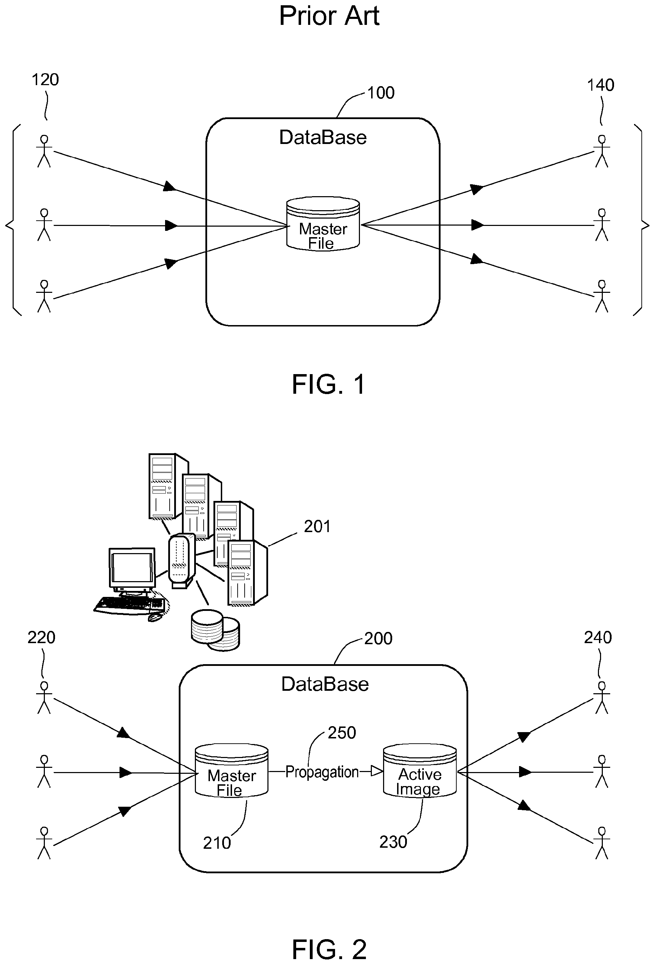

Those large databases have to sustain conflicting requirements. They must be operational in a 24-hour-a-day/7-day-a-week mode to sustain a worldwide business that never sleeps while they also need to constantly acquire new fares published by hundreds of large and smaller airline companies. As depicted in FIG. 1 the data providers (120), i.e., the airlines or the fare providers on behalf of the airlines, and the data requesters, i.e., the remote end-users of the database (100) are both trying to access simultaneously the same resource creating conflicts to answer queries while database contents are being updated.

Solutions that have been implemented to get around this problem include working in batch mode. That is, in one way or another, all received updates are prepared and accumulated until the database is disabled for end-users at regular intervals (e.g., each night or at scheduled intervals) to let administrators imbed all accumulated updates after which database is re-enabled and can resume answering end-user requests. This obviously however fail complying with the objective of sustaining a 24/7 mode of operation.

An alternative solution that has also been carried out is to implement a flip/flop mechanism. Two identical databases are maintained one serving to answer end-user queries while the other one is being updated. Like with the batch mode, at scheduled intervals, the roles of the databases are swapped. The obvious advantage of this solution is that there is no longer any down time for the end-users (or very little, while swapping takes place). However, none of these solutions allow propagating the incoming updates in real-time. The end-users will see the modifications only after, sometime, a long delay. Delay which essentially depends on the time interval set for the batch or flip/flop mode.

The document US 5 764 676 B1 presents a method to duplicate a dynamically changing first database to a second database by using a bulk update and then maintaining the second database in synchronization with the first database using transactional updates.

The document WO 98/50868 uses a method for capturing and propagating changes made upon an operational database to one or more datamarts.

It is therefore the prime object of the invention to disclose a mechanism that allows a continuous integration of the updates received from the data providers and their propagation so that they are coherently and rapidly made available to answer queries from the end-users of the database.

Further objects, features and advantages of the present invention will become apparent to the ones skilled in the art upon examination of the following description in reference to the accompanying drawings. It is intended that any additional advantages be incorporated herein, which can be derived from the appended claims.

### SUMMARY OF THE INVENTION

The invention fulfills the above objects of the invention by providing a method of integrating large volumes of updates in a database. Each individual update is comprised of a coherent set of data records supplied by a data provider. The database system includes a master file repository and an active image repository. The method comprises the steps of first integrating the updates supplied by a data provider into a master file (MF) of the master file repository. The integrating step includes the steps of:
- receiving the updates at the master file,
- defining in the master file a coherent set of data records for each individual update. To this end, the applicative part of the process controls whether the data are coherent and gives the order to integrate the coherent set of data records,
   during the definition of the coherent set of data records, for each individual update, generating through a logistic table of the database system a unique modification identifier to uniquely identify the coherent set of data records. Thus, the modification identifier identifies each coherent set of data records. The modification identifiers are attributed according to the arrival order of the updates at the master file,
- receiving the modification identifier at the master file,
- at the master file, assigning the modification identifier to the coherent set of data records,
- committing each individual update by updating the master file with the coherent set of data records of each individual update and with the modification identifier assigned to the coherent set of data records.

The method also comprises the step of obtaining from the logistic table a unique commit identifier for each individual update that has been committed by the master file. The commit identifier is a number that reflects the order in which the committing step is completed for each individual update. More precisely, once the update of the master file is completed; a commit service is called in which a commit identifier is given.

The method also comprises the step of loading the individual updates into an active image (Al) of the database system. More particularly, the loading step includes the steps of:
- retrieving from the master file the coherent set of data records of each uniquely identified individual update,
- synchronizing the active image and the master file by successively propagating into the active image, in the order specified by the commit identifier, each individual update,
- completing the propagation of each individual update into the active image.

Thereby, the invention allows end-users of the database system to start querying immediately the propagated updates from the active image.

Since the invention allows updates to be continuously integrated into the master file repository and propagated without delay into the active image, they are made available to the end-users of the database in real-time. Hence, end-users can start querying the updates as soon as they are committed by the active image repository while data providers possibly keep updating the master file with further updates that will be in turn soon propagated.

The invention may optionally include at least one of the following features:
- The coherent set of data records may for instance include origin and destination of a transportation service, fares, references of the service provider, fare classes and travel periods for which each fare applies.
- Each update is stored in a table of the master file in the form of at least one set of attributes, called MF keys, the MF key determining the record granularity of the master file and being associated with informative da ta of the updates.
- The MF key may for instance include origin and destination of a transportation service, references of the service provider and fare classes. The MF key is associated with informative data that includes fares and travel periods for which each fare applies.
- The updates are loaded and stored in a table of the active image (Al) in the form of one or more sets of attributes, called Al keys. The Al key determines the record granularity of the active image and is associated with informative data of the updates.
- One Al key comprises one or more MF keys.
- The Al key may for instance include origin and destination of a transportation service, references of the service provider. The Al key is associated with informative data that include fares, fare classes, and travel periods for which each fare applies.
- The master file contains the history of all the updates.
- The propagation of the update from the master file into the active image is triggered upon attribution, by the logistic table, of the commit identifier.
- The commit identifiers are attributed by the logistic table in the exact same order as the individual updates have been committed by the master file repository.
- Alternatively, the commit identifiers are attributed by the logistic table on a priority basis. Priority is given, e.g., to fast-executing individual updates.

The invention also describes a database system for integrating large volumes of updates including a master file repository comprising a master file (MF), an active image repository comprising an active image (Al) characterized in that the master file repository is arranged so that the master file receives the updates and defines a coherent set of data records for each update, and characterized in that the master file repository comprises a logistic table arranged for generating, for each update and during the definition of the coherent set of data records, a unique modification identifier to uniquely identify the coherent set of data records, the database system being also arranged to perform the following steps:
- at the master file: receiving the modification identifier and assigning the modification identifier to the coherent set of data records,
- committing each update by updating the master file with the coherent set of data records of each update and with the modification identifier assigned to the coherent set of data records,
- further obtaining from the logistic table a unique commit identifier for each update that has been committed by the master file, the commit identifier being a number that reflects the order in which the committing step is completed for each update,
- loading the updates into the active image (Al) of the active image repository, which includes retrieving from the master file the coherent set of data records of each update; synchronizing the active image and the master file by successively propagating into the active image, in the order specified by the commit identifier, each update; completing the propagation of each update into the active image when the loading of each corresponding set of data records is committed by the active image.

The invention also describes a database system including a first and a second repository wherein the first repository is arranged to receive updates from data providers and wherein the second repository is arranged to answer queries issued by end-users of the database system, the system comprising: a logistic table, the logistic table further including:
- means for generating modification identifiers, wherein the modification identifiers are used to uniquely identified each individual update in the first repository;
- means for generating commit identifiers, wherein the commit identifiers are used to control the loading of the updates into the second repository.

Furthermore, the first repository of the database system is organized by MF key and the second repository is organized by Al key.

The invention also includes a computer program product stored on a computer readable storage medium, comprising computer readable code means for causing at least one computer to operate the above method of integrating large volumes of updates in a database system.

### BRIEF DESCRIPTION OF THE DRAWINGS

FIGURE 1 shows a single-repository database of the prior art that must sustain a continuous acquisition of large volumes of data while attempting to simultaneously serve numerous end-users.
FIGURE 2 depicts the model of a database system according to the invention in its computerized environment.
FIGURE 3 shows details of the database system model including a master file (MF) repository organized by MFkey, also containing a logistic table, and an active image (Al) repository organized by Alkey.
FIGURE 4 discusses the overall operation of the database system that makes use of a modification identifier and of a commit identifier to propagate data from the master file to the active image.
FIGURES 5a to 5l are detailed examples used to illustrate the mode of operation of the database system.

### DETAILED DESCRIPTION

The following detailed description of the invention refers to the accompanying drawings. While the description includes exemplary embodiments, other embodiments are possible, and changes may be made to the embodiments described without departing from the spirit and scope of the invention.

FIG. 2 depicts the database model of the invention (200) which includes a dual repository. Consequently, the database system of the invention is also designated dual-repository database. One repository is optimized for the updating of data contents while the other one is designed to expedite the retrieval of data.

The master file or MF (210) is the container that is updated by data suppliers (220). In the exemplary context chosen to describe the invention, i.e., the airline industry and the large databases of fares maintained by various GDS's, a data supplier may be a provider of fares such as the airline tariff publishing company (ATPCO), an organization owned by a number of domestic and international airlines that collects and distributes the latest airfares of many airlines around the world on a multi-daily basis. Fares, and their application rules, provided by airlines and coded by ATPCO, are electronically transmitted for being automatically incorporated into the GDS fare databases. Another provider of fares can be an administrator or operator of the database authorized to file fares directly into the database generally through a dedicated graphic user interface (GUI) and the corresponding input application.

Whichever the sources from which data are supplied MF repository (210) is designed to facilitate data update and follow up of the changes. To this end it also contains the history of all the modifications brought to the master file.

The active image or AI (230) is the repository designed to facilitate data retrieval in response to the incoming requests issued by end-users of the database (240). For the airline industry and fare databases, end-users are the software applications that implement an ever growing number of online travel sites and providers of online travel services along with the regular travel agencies supported by the GDS's.

The chief objective of the database model of the invention is to allow a controlled and very fast propagation of high volumes of data (250) from the data suppliers (220) to the data requesters so that the end-users of the database (240) can take advantage of the changes and new offerings as soon as they are made available.

As other databases the database system of the invention is implemented as part of a computerized system including at least one computer with sufficient internal and external storing facilities (201) and processing resources to hold and operate the kind of large databases more specifically considered by the invention.

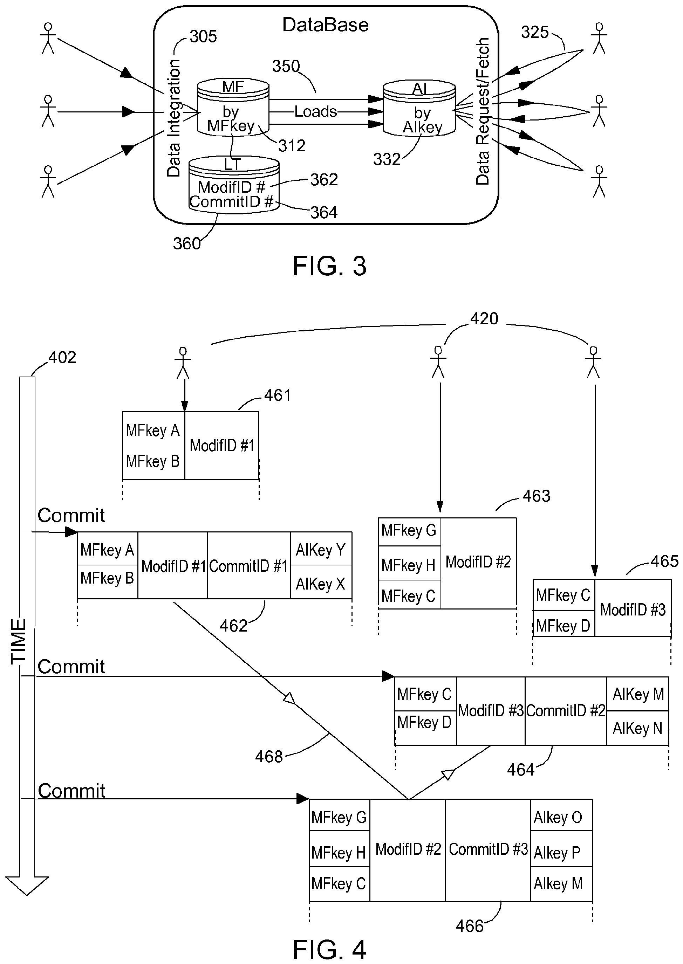

FIG. 3 shows details of the dual-repository database model.

The integration of new data into the master file (305) must be done on a coherent set of data records. This is achieved by attributing to each set a modification identifier called 'ModifID' (362) represented by a unique number. Thus, the system of the invention can support concurrent updates of the MF since each update is uniquely identified by a ModifID. The modifID are attributed according to the arrival order of the updates at the master file repository.

The synchronization of the two repositories (MF and AI) is controlled with the help of a commit Identifier called 'CommitID' (364) also represented by a unique number. The role of the CommitID is to manage the ordered loading (350) of the updates (referred to as data propagation in FIG. 2) from the MF into the AI. Each integration process gets its "CommitID" at the commit time, i.e., when a coherent set of data records has been actually and completely entered by one the data suppliers discussed in FIG. 2 into the master file (210). Thus the invention allows implementing multi-instance of load process. Each CommitID is attributed to preserve, during the loading of the updates into the AI, the sequence order in which the modifications have been actually committed in the MF. This guarantees that the updates are performed in the same sequence order in both repositories.

ModifID's and commitID's are hold and managed from a logistic table or LT (360) associated with the MF. More precisely, the logistic table is one of the tables contained in the master file repository. Therefore, modifID and commitID can be rapidly retrieved from the logistic table and send to the other tables of the master file. As modifID and commitID are assigned, the logistic table is progressively populated.

In both repositories data records are manipulated with a defined level of granularity. The master file (MF) contains the history of changes. It is organized by 'MFkey' (312). Each MFkey is a set of attributes and comprises a meaningful minimum set of data. The MF key determines the granularity of the master file, thus, it is at the MF key granularity that the history of changes is managed. The type of the MF key is linked with the product (e.g. record type of ATPCO or record type of GDS). The master file comprises many tables. Each table is dedicated to a record type. Each table is associated to a specific MF key identifier.

A table of the master file can be dedicated to a specific type of records provided by a specific data provider. Then, a specific MF key will be attributed to this table.

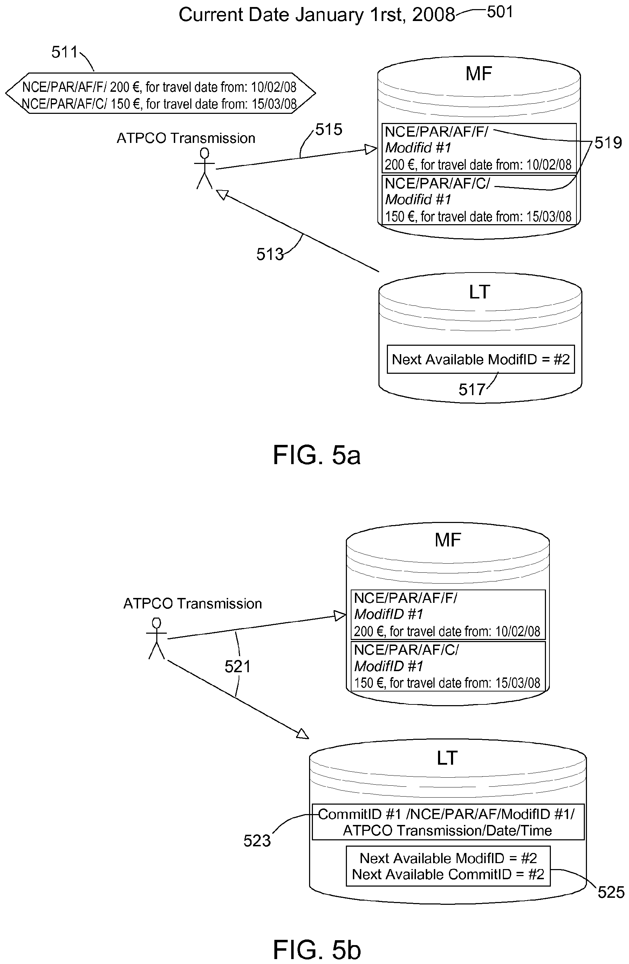

For instance, a first table of the master file (210) can be dedicated to fares for a first fare class (fare class "F") provided by ATPCO, a second table can be dedicated to fares for another fare class (fare class "C") also provided by ATPCO and a third table can be dedicated to rules provided by ATPCO. Then, the MF key attributed to this table can comprise the following data: a given origin/destination, a given service provider (airline for instance) and a given fare class. The table that is associated to this MF key contains informative data related to the attributes of the MF key. Examples are given in figures 5a to 5l. For instance, in figure 5a, a first MF key of the master file comprises a given origin/destination ("NCE/PAR"), a given service provider ("AF") and a given fare class ("F"). The informative data associated to that MF key includes: fare (200€) and a period of travel ("10/02/08") that corresponds to that fare. A second MF key of the master file comprises a given origin/destination ("NCE/PAR"), a given service provider ("AF") and a given fare class ("C"). The informative data associated to that MF key includes: fare (150€) and a period of travel ("15/03/08") that corresponds to that fare.

Records containing fares provided by another data provider would be integrated in other tables of the master file.
- For data retrieval, the active image (Al) comprises many tables identified by an 'Alkey' (332). An Al key record generally includes one or more MF key records. An Al key may also be equal to a MF key. AI key is the record granularity of the AI image. It is the meaningful minimum set of data that can be requested and fetched (235) from the AI by the end-users of the database. Each table of the Active image is dedicated to a record type. Each table of the active image is associated to an AI key identifier.

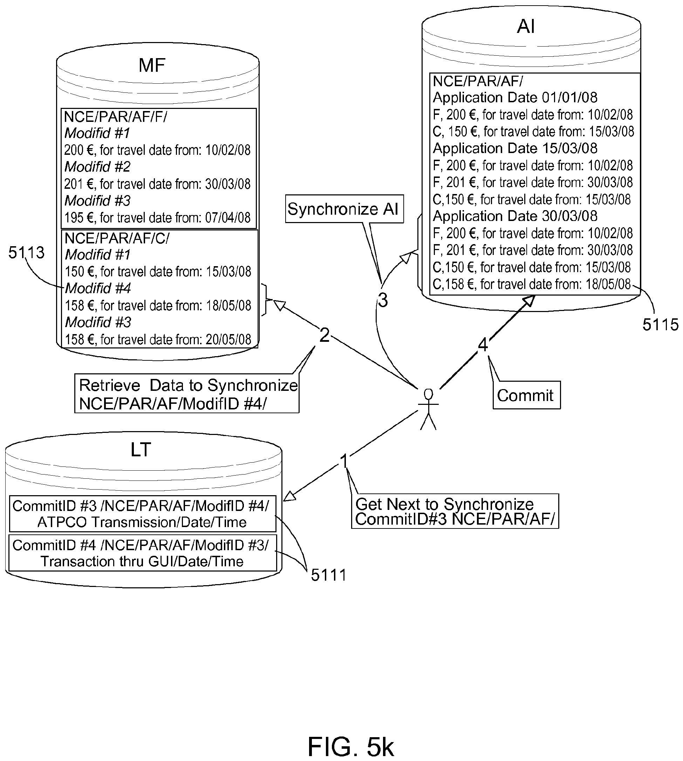

For instance, a table of the active image (230) can be dedicated to fares provided by a given fare provider. Then, the AI key attributed to this table can comprise the following data: a given origin/destination and a given service provider (airline for instance). The table that is associated to this AI key contains informative data related to the data of the AI key. For instance, in figure 5k, an AI key of the master file comprises a given origin/destination ("NCE/PAR") and a given service provider ("AF"). The informative data associated to that AI key includes: fare classes ("F" or "C") fares (200€, 150€ etc.") and periods of travel ("10/02/08, 15/03/08 etc") for each flight. All informative data contained in the MF keys presenting the attributes of the AI key are gathered in the table of the active image that is associated to that AI key.

FIG. 4 illustrates through an example the use of the identifiers (ModifID's and CommitID's) and keys (MFkey's and Alkey's) allowing a continuous acquisition of the updates.

In this example three updates are triggered by data suppliers (420) of the database. As a function of time (402) the updates are successively given three ModifID's by the logistic table shown in FIG. 3. Each update identified by a unique ModifID may involve a variable numbers of different records or MF key (461, 463 and 465).

When updates are committed by the MF repository they are attributed a unique CommitID as shown (462, 464 and 466). Depending on the execution time of the various processes involved, the CommitID's may not be necessarily attributed in the same order as the ModifID's. Hence, the loads into the active image are done in the order defined by the CommitID's so that the ModifID #3, in this example, is loaded into the AI prior to the ModifID #2 (468). The associated Alkey's included at commit time define the corresponding granularity elements of the AI.

FIG. 5a to 5l show a series of examples that further illustrate the use of the identifiers to allow the concurrent updating of the MF and the multi-instance processing of the loads into the AI.

In FIG. 5a depicts an update of the master file through an acquisition of two fares. Two new fares (511) are transmitted by a fare data provider, i.e., ATPCO in this case. In the depicted example, this transmission of new fares, which represents an update according to the present invention, occurs on 01/01/2008. Then, logistic table provides a first modification identifier (513) so that the next one to become available is ModifID #2 (517). The two new fares identified by the same identifier, i.e.: ModifID #1 are entered into the master file (515).

In this non limitative example, a coherent set of data records is NCE/PAR/AF/F 200€, for travel date from 10/02/08 and NCE/PAR/AF/C 150€, for travel date from 15/03/08. This coherent set of data records includes two fares, the date from which each fare is available and the concerned fare class ("F"). The coherent set of data records includes for each fare the reference of the flight as following origin/destination/airline name/ category of service. It also includes the references of the data provider.

In this example, an MFkey (519) is NCE/PAR/AF/F. The associated informative data are travel date and fare ("200€, and travel date from 10/02/08") and the assigned modification identifier is "ModifID#1". Another MFkey (519) is NCE/PAR/AF/C. The associated informative data are travel date and fare ("150€, for travel date from 15/03/08"). These two updates are regarded as belonging to a coherent set of data. Therefore, the same modification identifier ("ModiflD#1") is associated to both first and second MF keys.

FIG. 5b shows what happens when database transaction is committed (521). A first commit identifier is attributed (523) by the logistic table (LT) which refers to the two MFkey's mentioned above corresponding to the ModifID #1. Hence, the next available commit identifier becomes CommitID #2 (525)

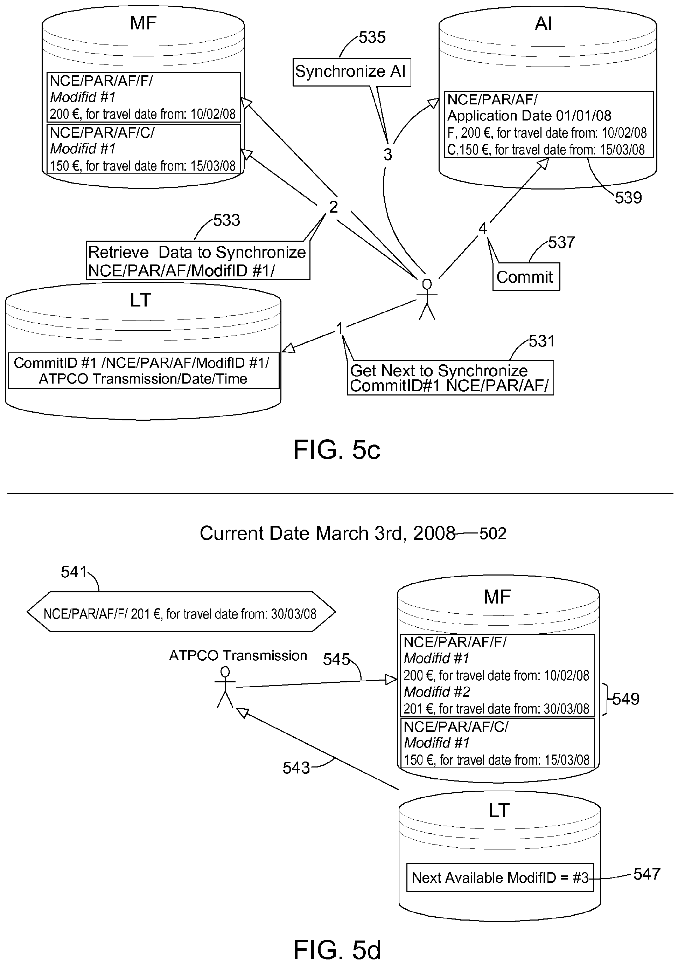

FIG. 5c illustrates how the active image is synchronized so that the end-users can start seeing the new transmitted fares. From the LT, a commit identifier is pending which triggers the retrieval (533) of the fares identified by the modification identifier (ModifID #1) associated with the pending commit identifier (CommitID #1). When the two MFkey's are retrieved they are loaded into the AI so that MF and AI are now synchronized (535).

When the AI transaction is in turn committed (537) the new transmitted fares become available to the end-users of the database under the form of a single Alkey (539). In this example AI key (539) comprises all informative data comprised in the two MFkeys (i.e. NCE/PAR/AF/F 200€, for travel date from 10/02/08 and NCE/PAR/AF/C 150€, for travel date from 15/03/08) and the date of the synchronization.

The operations described by FIG. 5a to FIG. 5c have all taken place on a same date (501) in a short time interval.

FIG. 5d and the two following ones describe the integration of a further fare (541) later received (502) on 15/03/2008. As in previous case the new received fare is first attributed (543) a unique modification identifier (ModifID #2) before it is entered in the MF (545). Because the new fare refers to an existing MFkey, this MF key is updated as shown (549) to include the new fare item. The next available modification identifier is now ModifID #3 (547).

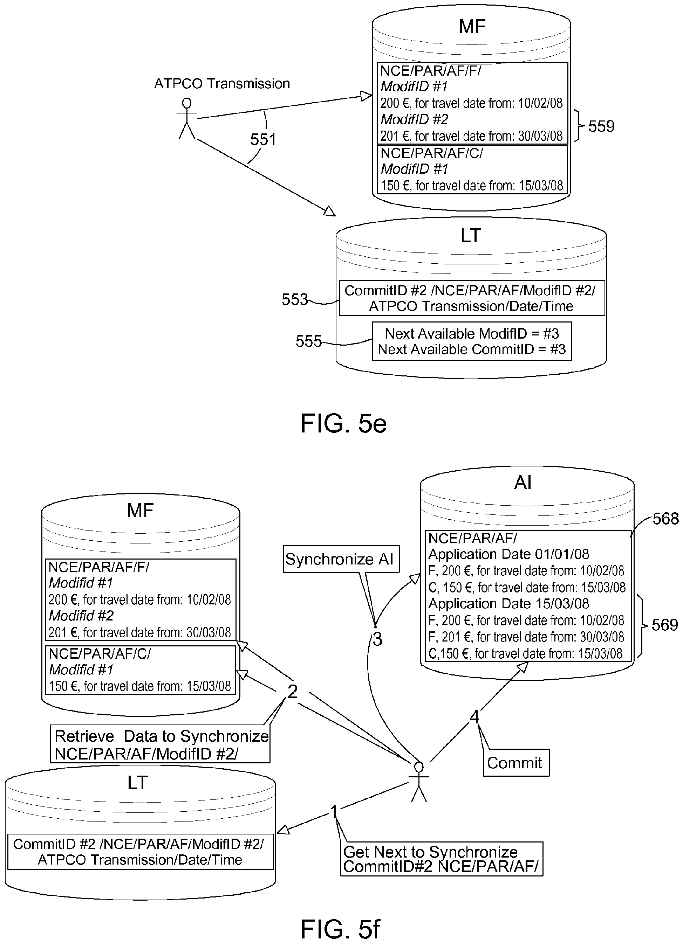

In FIG. 5e, when database transaction is committed (551), the next commit identifier (CommitID #2) is attributed (553) by the LT. The updated MFkey now include modifications corresponding to the ModifID #1 and the ModiflD#2 (559). Hence, the next available commit identifier becomes CommitlD#3 (559).

FIG. 5f is similar to FIG. 5c. The end result in this case is that the Alkey NCE/PAR/AF/ (568) now includes also the new loaded fares with the current application date of 15/03/08 (569).

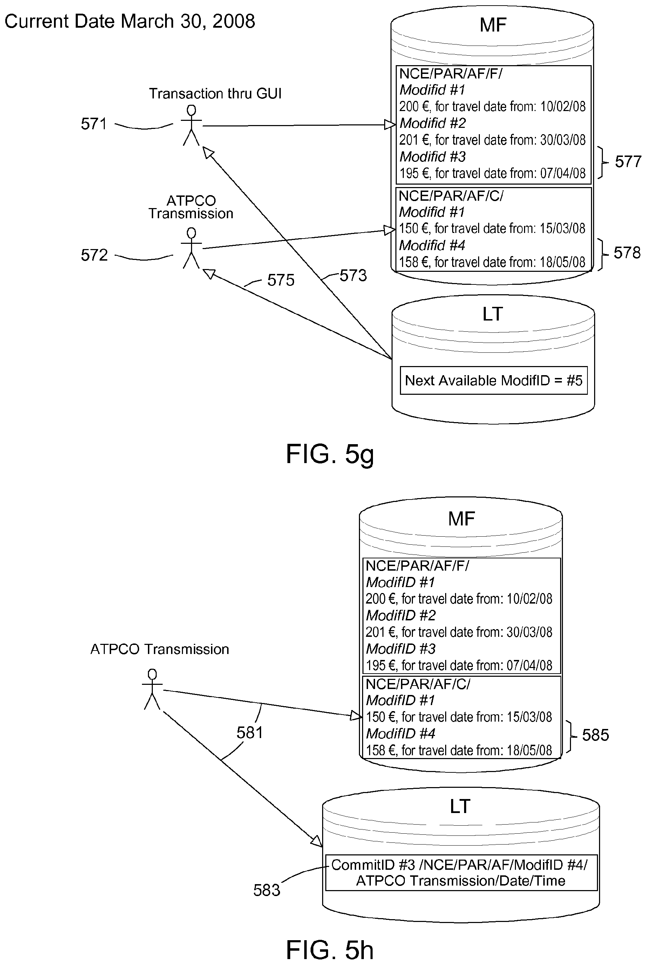

Examples continue with FIG. 5g where two fare providers are later updating concurrently the MF (current date is then 30/03/2008). As mentioned earlier, for databases of airline fares a source of fares is the transmission by ATPCO (572). Fares can also be entered directly through a dedicated GUI by an authorized operator of the database (571). In this particular example transaction through the GUI is first attributed the ModiflD#3 (573) and the ATPCO transmission the ModifID #4 (575). This means that the updates were transmitted first through the GUI and secondly by ATPCO. The corresponding updates appear respectively in the NCE/PAR/AF/F/ MFkey (577) and in the NCE/PAR/AF/C/ MFkey (578).

As shown in FIG. 5h ATPCO is first committed (581) with CommitID #3 (583) attributed by the LT in relation with ModifID #4 (585) while the other transaction, through the GUI, has not completed yet.

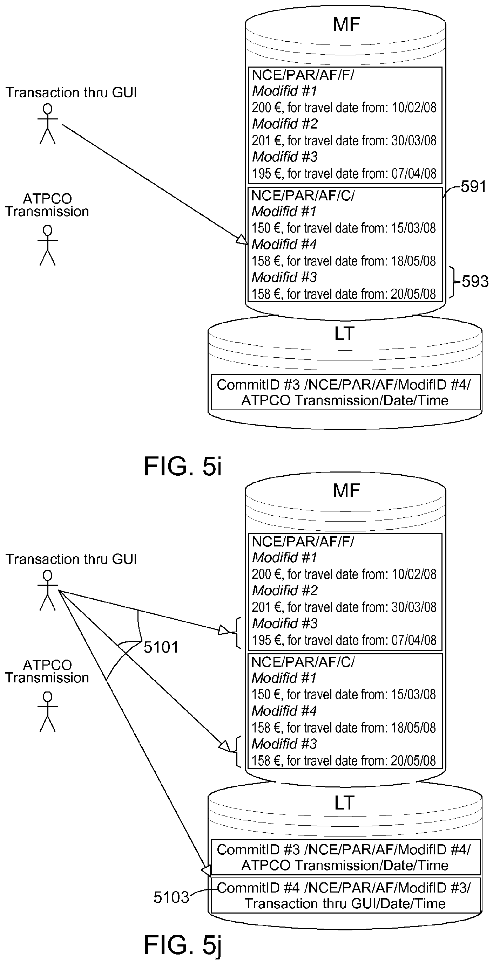

FIG. 5i shows a further update performed through the GUI. It concerns this time the NCE/PAR/AF/C/ MFkey (591) and ModifID #3 (593) that was previously attributed to the fare provider using the GUI interface.

FIG.5j shows the commitment phase of the updates (5101) where the CommitID #4 (5103) is attributed to the transaction through the GUI, in relation with the ModifID #3.

As in previous examples the AI repository is then synchronized to the MF. As shown in FIG. 5k, pending in the LT, there are at this stage two commit identifiers, namely: CommitID 3 and CommitID 4 (5111). First one is processed so that the corresponding update is retrieved from the MF, i.e.: the ModifID #4 (5113) and AI eventually synchronized (5115).

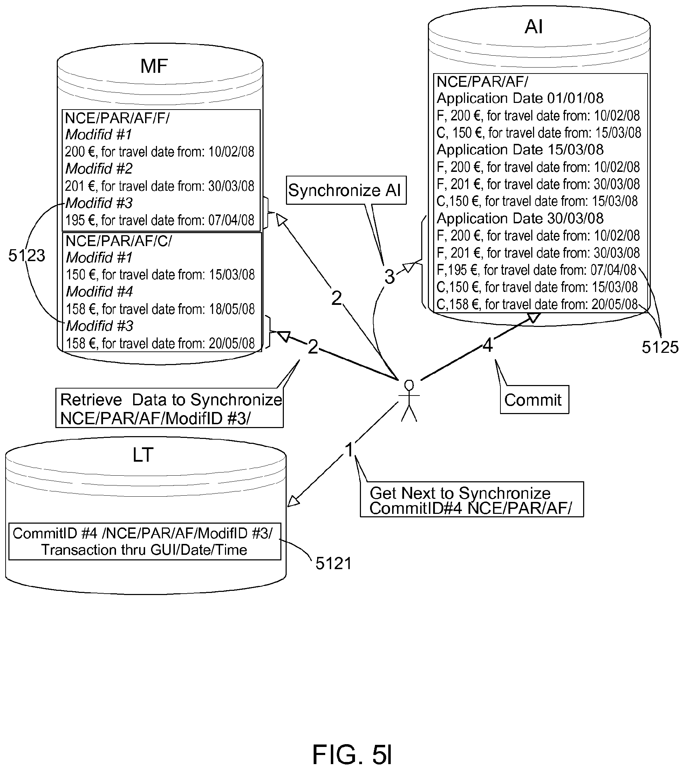

Finally, as shown in FIG. 5l, the CommitID #4 still pending in the LT (5121) is in turn processed. The two MFkey's of the corresponding modifications (5123) are retrieved from the MF and used to synchronize the AI (5125).

One will notice that the last item or informative data of the AI fare list, with an application date of 30/03/08, is overridden in this last exemplary synchronization. The travel date that was set by previous synchronization (5115) shown in FIG. 5k (from 18/05/08) is now replaced by the update done afterwards, from the transaction GUI, where the travel date has been changed to a new value, i.e.: from 20/05/08. In this example, the provider using the GUI interface is for instance an agent that can manually provide updates that relates to the same data as the updates provided by ATPCO. Corrections of rules and can therefore be manually handled. Thus, both updates from GUI interface and ATPCO can be integrated into same the MF key and propagated into the same AI key.

The order in which modifications are available to user through the active image is determined according to the commit identifier. Without the commit identifier, the synchronization would be wrong, i.e.: NCE/PAR/AF/C could travel from date 18/05/08 instead of 20/05/08.

The foregoing described technique of updating a database of fares in real-time indeed allows to accommodate huge numbers of fare modifications. It is not infrequent that an organization like ATPCO needs to transfer to a GDS millions of fares along with their associated rules. With the mechanism of the invention the new fares can be continuously provided, quickly integrated and made available to the end-users of the database in an elapsed time ranging from a matter of minutes to a couple of hours for the largest fare transmissions impacting several millions of fares. This is achieved while end-users still continue to interrogate the fare database and with concurrent updates possibly performed through multiple instances (typically, a few hundreds) of the direct GUI which allows authorized operators of the fare database to also update it when it is operational.

For instance, the present invention allows integrating 1 000 000 fares and 100 000 rules regulation in about thirty minutes coming from one transmission from a data provider such as ATPCO. Such integration is achieved without impacts on transmissions and on the GUI users.

Even though the invention has been detailed above through an example involving only fares related data it will be however apparent to the ones skilled in the art that the invention can be as well carried out to integrate and propagate in real time any sort of data.

## Claims

1. A method of integrating large volumes of updates in a database system (200) including a master file repository arranged to receiving updates from data providers, and an active image repository arranged to answer queries issued by end-users (240) of the database system (200), the method comprising: integrating the updates supplied by the data provider (220) into a master file (MF) repository (210) of the database system (200), the integrating step including the steps of:
receiving the updates at the master file repository (210),
defining in the master file repository (210) a coherent set of data records (511) for each update,
during the definition of the coherent set of data records (511), for each update,
attributing a unique modification identifier to uniquely identify the coherent set of data records (511),
receiving the modification identifier at the master file repository(210), according to the arrival of the update at the master file repository, at the master file repository (210), assigning the modification identifier to the coherent set of data records (511),
committing each update by updating (515) the master file repository (210) with the coherent set of data records of each update, and with the modification identifier assigned to the coherent set of data records (511),further
attributing a unique commit identifier (523) for each update that has been committed by the master file repository (210), the commit identifier (523) being a number that reflects the order in which the committing step is completed for each update, specifying a synchronization order for each individual update,
loading the updates into an active image (AI) repository (230) of the database system, the loading step including the steps of:
retrieving (533) from the master file repository (210) the coherent set of data records of each update;
synchronizing (535) the active image repository (230) and the master file repository (210) by successively propagating the coherent data set into the active image repository (230), in the order specified by the commit identifier for each update,
completing the propagation of each update into the active image repository (230) when the loading of each corresponding set of data records is committed (537) by the active image repository (230).

2. The method according to claim 1 wherein the coherent set of data records (511) includes origin and destination of a transportation service, fares, references of the service provider, fare classes and travel periods for which each fare applies.

3. The method according to any one of the preceding claims wherein each update is stored in a table of the master file repository (210) in the form of at least one set of attributes, called MF keys (461, 463 and 465), the MF key determining the record granularity of the master file repository (210) and being associated with informative data of the updates.

4. The method according to the preceding claim wherein the MF key includes origin and destination of a transportation service, references of the service provider and fare classes and wherein the MF key is associated with informative data that include fares and travel periods for which each fare applies.

5. The method according to any one of the two preceding claims wherein the updates are loaded and stored in a table of the active image repository (230) in the form of one or more sets of attributes, called Al keys (462, 464 and 466), the Al key determining the record granularity of the active image repository (230) and being associated with informative data of the updates.

6. The method according to the preceding claim wherein one Al key comprises one or more MF keys.

7. The method according to any one of the two preceding claims wherein the Al key includes origin and destination of a transportation service, references of the service provider and wherein the Al key is associated with informative data that include fares, fare classes, and travel periods for which each fare applies.

8. The method according to any one of the preceding claims wherein the master file (210) contains the history of all the updates.

9. The method according to any one of the preceding claims wherein the propagation of the update from the master file (210) into the active image (230) is triggered upon attribution, of the commit identifier.

10. A database system (200) for integrating large volumes of updates including a master file repository receiving updates from data providers, , an active image repository answering queries issued by end-users (240) of the database system (200), **characterized in that** the master file repository is arranged so that the master file (210) receives the updates and defines a coherent set of data records (511) for each update, and attributing a unique modification identifier to uniquely identify the coherent set of data records (511)), the database system (200) being also arranged to perform the following steps:
at the master file repository (210): receiving the modification identifier (210) and assigning the modification identifier to the coherent set of data records (511),
committing each update by updating (515) the master file repository (210) with the coherent set of data records of each update and with the modification identifier assigned to the coherent set of data records,
attributing a unique commit identifier (523) for each update that has been committed by the master file (210), the commit identifier (523) being a number that reflects the order in which the committing step is completed for each update, specifying an synchronization order for each individual updateloading the updates into the active image repository, which includes retrieving (533) from the master file repository (210) the coherent set of data records of each update;
synchronizing (535) the active image repository (230) and the master file repository (210) by successively propagating into the active image repository (230), in the order specified by the commit identifier, each update;
completing the propagation of each update into the active image repository (230) when the loading of each corresponding set of data records is committed (537) by the active image repository(23 0).

11. A computer program product stored on a computer readable storage medium (201), comprising computer readable code means for causing at least one computer to operate the method of integrating large volumes of updates in a database system according to any one of the claims 1 to 8.

## Patentansprüche

1. Verfahren zum Integrieren großer Mengen von Aktualisierungen in ein Datenbanksystem (200), das ein Masterdatei-Repository, welches zum Empfangen von Aktualisierungen von Datenanbietern eingerichtet ist, und ein aktives Abbild-Repository enthält, welches zum Beantworten von Anfragen eingerichtet ist, die von Endbenutzern (240) des Datenbanksystems (200) ausgegeben werden, wobei das Verfahren umfasst:
Integrieren der vom Datenanbieter (220) bereitgestellten Aktualisierungen in ein Masterdatei (master file, MF) -Repository (210) des Datenbanksystems (200), wobei der Integrationsschritt die folgenden Schritte umfasst:
Empfangen der Aktualisierungen an dem Masterdatei-Repository (210),
Definieren eines kohärenten Satzes von Datensätzen (511) für jede Aktualisierung in dem Masterdatei-Repository (210),
während der Definition des kohärenten Satzes von Datensätzen (511) für jede Aktualisierung,
Zuordnen eines eindeutigen Änderungsbezeichners, um den kohärenten Satz von Datensätzen (511) eindeutig zu identifizieren,
Empfangen des Änderungsbezeichners an dem Masterdatei-Repository (210), in Übereinstimmung mit dem Eintreffen der Aktualisierungen an dem Masterdatei-Repository, Zuweisen des Änderungsbezeichners an den kohärenten Satz von Datensätzen (511) an dem Masterdatei-Repository (210),
Bestätigen jeder Aktualisierung durch Aktualisieren (515) des Masterdatei-Repositorys (210) mit dem kohärenten Satz von Datensätzen jeder Aktualisierung und mit dem Änderungsbezeichners, der dem kohärenten Satz von Datensätzen (511) zugewiesen ist, ferner
Zuordnen eines eindeutigen Bestätigungsbezeichners (523) für jede Aktualisierung, die von dem Masterdatei-Repository (210) bestätigt wurde, wobei der Bestätigungsbezeichner (523) eine Zahl ist, die die Reihenfolge widerspiegelt, in welcher der Bestätigungsschritt für jede Aktualisierung abgeschlossen wurde, die eine Synchronisationsreihenfolge für jede einzelne Aktualisierung bestimmt,
Laden der Aktualisierungen in ein aktives Abbild (active image, AI) -Repository (230) des Datenbanksystems, wobei der Ladeschritt die folgenden Schritte enthält:
Abrufen (533) des kohärenten Satzes von Datensätzen jeder Aktualisierung von dem Masterdatei-Repository (210);
Synchronisieren (535) des aktiven Abbild-Repositorys (230) und des Masterdatei-Repositorys (210) durch sukzessives Propagieren des kohärenten Satzes von Datensätzen in das aktive Abbild-Repository (230) in der durch den Bestätigungsbezeichner für jede Aktualisierung bestimmten Reihenfolge,
Abschließen der Propagierung jeder Aktualisierung in das aktive Abbild-Repository (230), wenn das Laden jedes entsprechenden Satzes von Datensätzen durch das aktive Abbild-Repository (230) abgeschlossen wird (537).

2. Verfahren nach Anspruch 1, wobei der kohärente Satz von Datensätzen (511) Anfang und Ziel eines Beförderungsdienstes, Tarife, Referenzen des Dienstleisters, Fahrpreisklassen und Fahrzeiten, für die jeder Fahrpreis gilt, enthält.

3. Verfahren nach einem der vorhergehenden Ansprüche, wobei jede Aktualisierung in einer Tabelle des Masterdatei-Repositorys (210) in der Form von mindestens einem Satz von Attributen, genannt MF-Schlüssel (461, 463 und 465), gespeichert wird, wobei der MF-Schlüssel die Datensatz-Granularität des Masterdatei-Repositorys (210) bestimmt und mit informativen Daten der Aktualisierung verknüpft ist.

4. Verfahren nach dem vorhergehenden Anspruch, wobei der MF-Schlüssel Anfang und Ziel eines Beförderungsdienstes, Referenzen des Dienstleisters und Fahrpreisklassen enthält und wobei der MF-Schlüssel mit informativen Daten verknüpft ist, die Fahrpreise und Fahrzeiten, für die jeder Fahrpreis gilt, enthalten.

5. Verfahren nach einem der beiden vorhergehenden Ansprüche, wobei die Aktualisierungen geladen und in einer Tabelle des aktiven Abbild-Repositorys (230) in der Form eines oder mehrerer Sätze von Attributen, genannt AI-Schlüssel (462, 464 und 466), gespeichert werden, wobei der AI-Schlüssel die Datensatz-Granularität des aktiven Abbild-Repositorys (230) bestimmt und mit informativen Daten der Aktualisierungen verknüpft ist.

6. Verfahren nach dem vorhergehenden Anspruch, worin ein AI-Schlüssel einen oder mehrere MF-Schlüssel umfasst.

7. Verfahren nach einem der beiden vorhergehenden Ansprüche, wobei der AI-Schlüssel Anfang und Ziel eines Beförderungsdienstes, Referenzen des Dienstleisters enthält und wobei der AI-Schlüssel mit informativen Daten verknüpft ist, die Fahrpreise, Fahrpreisklassen und Fahrzeiten, für die jeder Fahrpreis gilt, enthalten.

8. Verfahren nach einem der vorhergehenden Ansprüche, wobei die Masterdatei (210) die Historie aller Aktualisierungen enthält.

9. Verfahren nach einem der vorhergehenden Ansprüche, wobei die Propagierung der Aktualisierung von der Masterdatei (210) in das aktive Abbild (230) bei Zuordnung des Bestätigungsbezeichners ausgelöst wird.

10. Datenbanksystem (200) zum Integrieren großer Mengen von Aktualisierungen, das ein Masterdatei-Repository, welches Aktualisierungen von Datenanbietern empfängt, ein aktives Abbild-Repository enthält, welches Anfragen beantwortet, die von Endbenutzern (240) des Datenbanksystems (200) ausgegeben sind, **dadurch gekennzeichnet, dass** das Masterdatei-Repository derart eingerichtet ist, dass die Masterdatei (210) die Aktualisierungen empfängt und einen kohärenten Satz von Datensätzen (511) für jede Aktualisierung definiert, und ein eindeutiger Änderungsbezeichner zugewiesen wird, um den kohärenten Satz von Datensätzen (511) eindeutig zu identifizieren, wobei das Datenbanksystem (200) ebenfalls dazu eingerichtet ist, die nachfolgenden Schritte durchzuführen:
an dem Masterdatei-Repository (210): Empfangen des Änderungsbezeichners (210) und Zuweisen des Änderungsbezeichners zu dem kohärenten Satz von Datensätzen (511),
Bestätigen jeder Aktualisierung durch Aktualisieren (515) des Masterdatei-Repositorys (210) mit dem kohärenten Satz von Datensätzen jeder Aktualisierung und mit dem Änderungsbezeichners, der dem kohärenten Satz von Datensätzen zugewiesen ist,
Zuordnen eines eindeutigen Bestätigungsbezeichners (523) für jede Aktualisierung, die durch die Masterdatei (210) bestätigt wurde, wobei der Bestätigungsbezeichner (523) eine Zahl ist, die die Reihenfolge widerspiegelt, in welcher der Bestätigungsschritt für jede Aktualisierung abgeschlossen wurde, die eine Synchronisationsreihenfolge für jede einzelne Aktualisierung bestimmt, Laden der Aktualisierungen in das aktive Abbild-Repository, welches Abrufen (533) des kohärenten Satzes von Datensätzen jeder Aktualisierung aus dem Masterdatei-Repository (210) enthält;
Synchronisieren (535) des aktiven Abbild-Repositorys (230) und des Masterdatei-Repositorys (210) durch sukzessives Propagieren jeder Aktualisierung in der durch den Bestätigungsbezeichner bestimmten Reihenfolge in das aktive Abbild-Repository (230);
Abschließen der Propagierung jeder Aktualisierung in das aktive Abbild-Repository (230), wenn das Laden jedes entsprechenden Satzes von Datensätzen durch das aktive Abbild-Repository (230) abgeschlossen ist (537).

11. Computerprogrammprodukt, das auf einem computerlesbaren Speichermedium (201) gespeichert ist, umfassend computerlesbare Codemittel zum Veranlassen von mindestens einem Computer, das Verfahren zum Integrieren großer Mengen von Aktualisierungen in einem Datenbanksystem nach einem der Ansprüche 1 bis 8 zu betreiben.

## Revendications

1. Procédé d'intégration de grands volumes de mises à jour dans un système de base de données (200) incluant un référentiel de fichiers maîtres agencé pour recevoir des mises à jour en provenance de fournisseurs de données, et un référentiel d'images actives agencé pour répondre à des requêtes émises par des utilisateurs finaux (240) du système de base de données (200), le procédé comprenant :
l'intégration des mises à jour fournies par le fournisseur de données (220) dans un référentiel de fichiers maîtres (MF) (210) du système de base de données (200), l'étape d'intégration incluant les étapes consistant à :
recevoir les mises à jour au niveau du référentiel de fichiers maîtres (210),
définir dans le référentiel de fichiers maîtres (210) un ensemble cohérent d'enregistrements de données (511) pour chaque mise à jour,
pendant la définition de l'ensemble cohérent d'enregistrements de données (511), pour chaque mise à jour,
attribuer un identificateur de modification unique pour identifier de manière unique l'ensemble cohérent d'enregistrements de données (511),
recevoir l'identificateur de modification au niveau du référentiel de fichiers maîtres (210), en fonction de l'arrivée de la mises à jour au niveau du référentiel de fichiers maîtres, au niveau du référentiel de fichiers maîtres (210), assigner l'identificateur de modification à l'ensemble cohérent d'enregistrements de données (511),
réaliser chaque mise à jour en mettant à jour (515) le référentiel de fichiers maîtres (210) avec l'ensemble cohérent d'enregistrements de données de chaque mise à jour, et avec l'identificateur de modification assigné à l'ensemble cohérent d'enregistrements de données (511), en outre
attribuer un identificateur de réalisation unique (523) pour chaque mise à jour qui a été réalisée par le référentiel de fichiers maîtres (210), l'identificateur de réalisation (523) étant un numéro qui reflète l'ordre dans lequel l'étape de réalisation est accomplie pour chaque mise à jour, spécifier un ordre de synchronisation pour chaque mise à jour individuelle,
charger les mises à jour dans un référentiel d'images actives (AI) (230) du système de base de données, l'étape de chargement incluant les étapes consistant à :
récupérer (533) à partir du référentiel de fichiers maîtres (210) l'ensemble cohérent d'enregistrements de données de chaque mise à jour ;
synchroniser (535) le référentiel d'images actives (230) et le référentiel de fichiers maîtres (210) en propageant successivement l'ensemble de données cohérent dans le référentiel d'images actives (230), dans l'ordre spécifié par l'identificateur de réalisation pour chaque mise à jour,
accomplir la propagation de chaque mise à jour dans le référentiel d'images actives (230) lorsque le chargement de chaque ensemble correspondant d'enregistrements de données est réalisé (537) par le référentiel d'images actives (230).

2. Procédé selon la revendication 1, dans lequel l'ensemble cohérent d'enregistrements de données (511) inclut l'origine et la destination d'un service de transport, des tarifs, des références du fournisseur de service, des classes de tarif et des périodes de voyage pour lesquelles chaque tarif s'applique.

3. Procédé selon l'une quelconque des revendications précédentes, dans lequel chaque mise à jour est stockée dans une table du référentiel de fichiers maîtres (210) sous la forme d'au moins un ensemble d'attributs, appelé clés MF (461, 463 et 465), la clé MF déterminant la granularité d'enregistrement du référentiel de fichiers maîtres (210) et étant associée à des données informatives des mises à jour.

4. Procédé selon la revendication précédente, dans lequel la clé MF inclut l'origine et la destination d'un service de transport, des références du fournisseur de service et des classes de tarif et dans lequel la clé MF est associée à des données informatives qui incluent des tarifs et des périodes de voyage pour lesquelles chaque tarif s'applique.

5. Procédé selon l'une quelconque des deux revendications précédentes, dans lequel les mises à jour sont chargées et stockées dans une table du référentiel d'images actives (230) sous la forme d'un ou plusieurs ensemble d'attributs, appelés clés AI (462, 464 et 466), la clé AI déterminant la granularité d'enregistrement du référentiel d'images actives (230) et étant associée à des données informatives des mises à jour.

6. Procédé selon la revendication précédente, dans lequel une clé AI comprend une ou plusieurs clés MF.

7. Procédé selon l'une quelconque des deux revendications précédentes, dans lequel la clé AI inclut l'origine et la destination d'un service de transport, des références du fournisseur de service et dans lequel la clé AI est associée à des données informatives qui incluent des tarifs, des classes de tarif, et des périodes de voyage pour lesquelles chaque tarif s'applique.

8. Procédé selon l'une quelconque des revendications précédentes, dans lequel le fichier maître (210) contient l'historique de toutes les mises à jour.

9. Procédé selon l'une quelconque des revendications précédentes, dans lequel la propagation de la mise à jour du fichier maître (210) à l'image active (230) est déclenchée lors de l'attribution, de l'identificateur de réalisation.

10. Système de base de données (200) pour intégrer de grands volumes de mises à jour incluant un référentiel de fichiers maîtres recevant des mises à jour en provenance de fournisseurs de données, un référentiel d'images actives répondant à des requêtes émises par des utilisateurs finaux (240) du système de base de données (200), **caractérisé en ce que** le référentiel de fichiers maîtres est agencé de sorte que le fichier maître (210) reçoive les mises à jour et définisse un ensemble cohérent d'enregistrements de données (511) pour chaque mise à jour, et attribuant un identificateur de modification unique pour identifier de manière unique l'ensemble cohérent d'enregistrements de données (511), le système de base de données (200) étant également agencé pour effectuer les étapes suivantes :
au niveau du référentiel de fichiers maîtres (210) : recevoir l'identificateur de modification (210) et assigner l'identificateur de modification à l'ensemble cohérent d'enregistrements de données (511),
réaliser chaque mise à jour en mettant à jour (515) le référentiel de fichiers maîtres (210) avec l'ensemble cohérent d'enregistrements de données de chaque mise à jour et avec l'identificateur de modification assigné à l'ensemble cohérent d'enregistrements de données,
attribuer un identificateur de réalisation unique (523) pour chaque mise à jour qui a été réalisée par le fichier maître (210), l'identificateur de réalisation (523) étant un numéro qui reflète l'ordre dans lequel l'étape de réalisation est accomplie pour chaque mise à jour, spécifier un ordre de synchronisation pour chaque mise à jour individuelle, charger les mises à jour dans le référentiel d'images actives, qui inclut la récupération (533) à partir du référentiel de fichiers maîtres (210) de l'ensemble cohérent d'enregistrements de données de chaque mise à jour ;
synchroniser (535) le référentiel d'images actives (230) et le référentiel de fichiers maîtres (210) en propageant successivement dans le référentiel d'images actives (230), dans l'ordre spécifié par l'identificateur de réalisation, chaque mise à jour,
accomplir la propagation de chaque mise à jour dans le référentiel d'images actives (230) lorsque le chargement de chaque ensemble correspondant d'enregistrements de données est réalisé (537) par le référentiel d'images actives (230).

11. Produit programme d'ordinateur stocké sur un support de stockage lisible par ordinateur (201), comprenant des moyens de code lisibles par ordinateur pour amener au moins un ordinateur à mettre en oeuvre le procédé d'intégration de grands volumes de mises à jour dans un système de base de données selon l'une quelconque des revendications 1 à 8.
